# EUROPÄISCHE PATENTSCHRIFT

(11) **EP 0 761 944 B1**
(45) Veröffentlichungstag und Bekanntmachung des Hinweises auf die Patenterteilung: **31.10.2001**
(21) Anmeldenummer: 96810522.1
(22) Anmeldetag: 08.08.1996
(51) Int. Cl.: F02C 7/143

(54) **Verfahren zum Betrieb eines Gasturbinenkraftwerks**
Method of operation for a gas turbine power plant
Méthode d'opération pour une centrale à turbine à gaz

(30) Priorität: 28.08.1995 DE 19531562
(43) Veröffentlichungstag der Anmeldung: 12.03.1997
(73) Patentinhaber: ALSTOM (Schweiz) AG, 5400 Baden (CH)
(72) Erfinder: Frutschi, Hans Ulrich, 5223 Riniken (CH)

(56) Entgegenhaltungen:
- FR-A- 2 193 427
- US-A- 5 193 352
- US-A- 5 203 161
- US-A- 5 444 971

## Beschreibung

### Technisches Gebiet

Die vorliegende Erfindung betrifft ein Verfahren zum Betrieb einer Kraftwerksanlage auf Basis einer Gasturbine, welche Gasturbine unter Anderem einen Zwischenkühler zur Kuhlung einer vorverdichteten Luft beinhaltet.

### Stand der Technik

Bei der Integration eines Zwischenkühlers in die Verdichtereinheit einer Kraftwerksanlage auf Basis einer Gasturbine ist darauf zu achten, dass in letztgenannter keine Kondensation der Luftfeuchtigkeit auftritt. Insbesondere bei der Verwendung von Axialverdichtern können durch die Wiederverdampfung des nun durch Staubteilchen kontaminierten Wassers festhaftende Ablagerungen auf der Beschaufelung des dem Zwischenkühler nachgeschalteten Verdichterteils bewirken, welche eine Minderung von Leistung und Wirkungsgrad im Laufe der Betriebszeit nach sich ziehen. Je nach Beschaffenheit der Reststaubmenge, welche die Ansaugfilterung passiert, können zementartige Beläge insbesondere auf den Leitschaufeln entstehen, welche nur durch Oeffnen der Maschine entfernt werden können, was ausser den erwähnten Leistungs- und Wirkungsgradeinbussen auch noch zusätzliche Stillstandzeiten mit sich bringt.

Aus der US 5,193, 352 ist ein Verfahren zur Kühlung der Ansangluft einer Gasturbinenanlage bekannt. Aus dieser Schrift ist auch bekannt, eine Kühlmitteltemperatur auf einen Sollwert einzustellen, indem ein Teil eines Kühlmittels durch eine Rückkühleinheit geleitet, und ein anderer Teil um die Rückkühleinheit herungeführt wird. Die Regelung der Teilströme kann dabei in Abhängigkeit von gemessenen Zuständen der Ansangluft vor und nach der Kühlung erfolgen.

Eine Abhilfemassnahme hierzu, welche bekanntgeworden ist, besteht darin, dass die Rückkühltemperatur auf einem erhöhten Temperaturniveau von 45-70°C gehalten wird. Dabei ist aber zu beachten, dass für die Kondensation der Luftfeuchtigkeit nicht die Temperatur und der Druck der rückgekühlten Luft im Zwischenkühler massgebend sind, sondern die tiefste Temperatur der entsprechenden Kühlfläche.

Eine solche pauschale Massnahme beinhaltet für nicht an der Grenze liegende Wetterbedingungen eine erhebliche Einbusse des Leistungs- und Wirkungsgradpotentials der Zwischenkühlung.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art Vorkehrungen vorzuschlagen, welche eine Luftkondensation während der Zwischenkühlung innerhalb der Luftverdichtung zu vermeiden vermögen.

Um das Leistungs- und Wirkungsgradpotential der Zwischenkühlung voll ausnützen zu können, wird dabei die Temperatur des Kühlwassers oder eines anderen Kühlmediums am Eintritt in den Zwischenkühler anhand der Aussentemperatur, der relativen Luftfeuchte und allenfalls des Umgebungsdruckes, sowie des Luftdruckes am Austritt des Zwischenkühlers, auf Niveau der Taupunkttemperatur an dieser Stelle geregelt. Die kleine Temperaturdifferenz zwischen Kühlelement und Kühlwasser von 1-3°C am kälteren Ende stellt dann gerade den erforderlichen Sicherheitsabstand dar.

Vorteilhafte und zweckmässige Weiterbildungen der erfindungsgemässen Aufgabenlösung sind in den übrigen Ansprüchen gekennzeichnet.

Im folgenden wird anhand der Zeichnungen ein Ausführungsbeispiel der Erfindung dargestellt und näher erläutert. Alle für das unmittelbare Verständnis der Erfindung nicht erforderlichen Elemente sind weggelassen worden. Gleiche Elemente sind in den verschiedenen Figuren mit den gleichen Bezugszeichen versehen. Die Strömungsrichtung der Medien ist mit Pfeilen angegeben.

### Kurze Beschreibung der Zeichnungen

Es zeigt:
- Fig. 1: eine Kraftwerksanlage mit Temperaturregelung des Kühlwassers und
- Fig. 2: Sättigungskurven für Wasserdampf in Luft bei verschiedenen Verdichterdrücken.

### Wege zur Ausführung der Erfindung, gewerbliche Verwendbarkeit

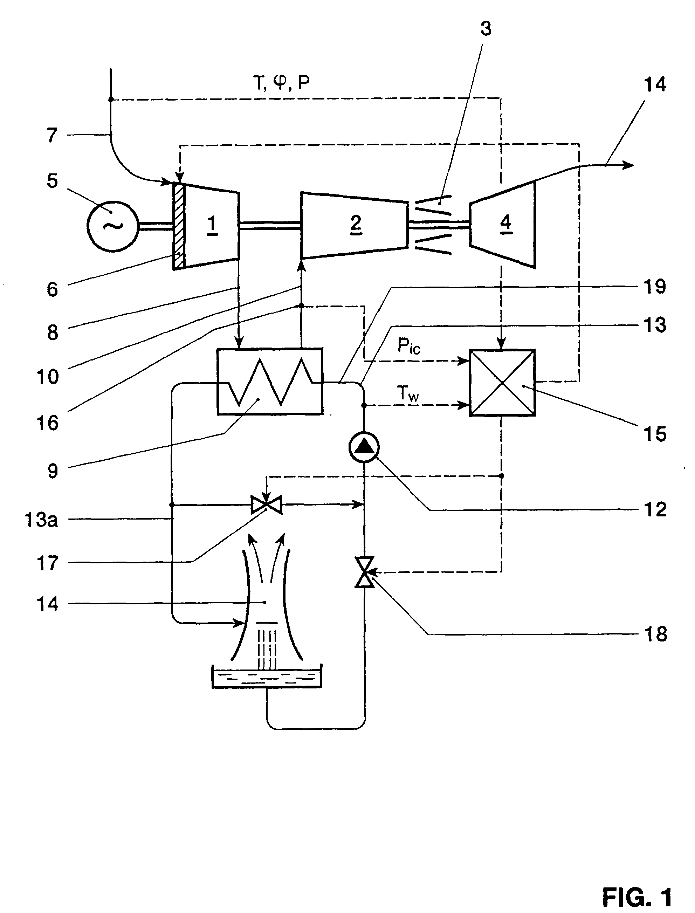

Fig. 1 zeigt den Aufbau einer Kraftwerksanlage, bei welcher die Gasturbogruppe mit einer Regelung der Temperatur des Kühlmittels für die Zwischenkühlung der teilverdichteten Luft innerhalb einer Verdichtereinheit versehen ist. Als Kühlmittel wird im folgenden Kühlwasser zugrundegelegt. Die Kraftwerksanlage selbst besteht aus einem Niederdruck-Verdichter 1, einem nachgeschalteten Hochdruck-Verdichter 2, einer Brennkammer 3, einer Turbine 4 und einem Generator 5. Der Niederdruck-Verdichter 1 weist anströmungsseitig mindestens eine verstellbare Verdichterleitreihe 6 auf, deren Funktion im Zusammenhang mit der Regelung der Kühlmitteltemperatur weiter unten näher zur Erläuterung kommen wird. Die angesaugte Luft 7 wird im Niederdruck-Verdichter 1 zunächst zwischenverdichtet, anschliessend strömt diese Luft 8 in einen Zwischenkühler 9, in welchem sie entsprechend gekühlt wird, bevor diese Luft 10 im Hochdruck-Verdichter 2 fertigverdichtet und dann in die Brennkammer 3 geleitet wird. Die in dieser Brennkammer 3 produzierten Heissgase beaufschlagen dann die nachgeschaltete Turbine 4, um anschliessend als Abgase 11 vorzugsweise in einem nicht gezeigten Abhitzedampferzeuger zu Bildung einer Dampfmenge zur Betreibung einer Dampfturbine weiterverwendet zu werden. Der Zwischenkühler 9 wird, vorzugsweise in Gegenströmung gegenüber der Durchflussrichtung der verdichteten Luft 8, durch ein mittels einer Pumpe 12 gefördetes kaltes resp. vorgewärmtes Kühlwasser 13 durchströmt. In diesem Zwischenkühler 9 wird das Kühlwasser 13 durch Wärmetausch aufgeheizt 13a und dann zu einer Wärmesenke 14, welche hier als Kühlturm dargestellt ist, abgeleitet. Durch Erfassung der Umgebungstemperatur T, der Luftfeuchte ϕ und des Umgebungsdruckes p sowie des Austrittsluftdruckes Pic des Zwischenkühlers 9 und Zuleitung dieser Signale zu einem Rechner 15, der auch Reglerfunktionen erfüllt, wird die Taupunkttemperatur der im Zwischenkühler 9 gekühlten Luft 10 an einer Abnahmestelle 16 stromab des Zwischenkühlers 9 und stromauf des Hochdruck-Verdichters 2 bestimmt, wobei mittels eines Bypasses 17 gegenüber der Wärmesenke 14 zwischen der Strömung des dort strömenden Kühlwassers 13 und des aufgeheizten Kühlwassers 13a, und bei Bedarf mittels eines weiteren Drosselorgans 18 in der Strömung des nun durch Aktivierung des Bypasses vorgewärmten Kühlwassers 13 aus der Wärmesenke 14, wird die Kühlwassertemperatur an einer Stelle 19 unmittelbar vor dem Zwischenkühler 9 auf diesen Wert geregelt, wobei eine in diesem Bereich abgenommene Information hinsichtlich der vorgewärmten Kühlwassertemperatur Tw als Rückführsignal dient. Je nach Anordnung des Zwischenkühlers 9, insbesondere bei gut wirksamen Entwässerungseinrichtungen, kann die Temperatur der gekühlten zwischenverdichteten Luft 10 an der Stelle 16, unmittelbar stromauf des Hochdruck-Verdichter 2 auf diesen Wert geregelt werden. Je nach Aussentemperatur T und vorhandenen Temperaturen an den bereits beschriebenen Stellen 19 oder 16 ergibt sich ein bestimmter, stark variierender Austrittsluftdruck Pic aus dem Zwischenkühler 9. Dadurch können unter extremen Bedingungen die Betriebspunkte der beiden Teilverdichter 1, 2 ungünstig beeinflusst werden. Um hier Gegensteuer zu geben, kann der Rechner 15 mindestens eine verstellbare Verdichterleitreihe 6 so verstellen, dass ein günstiger Zwischendruck der vorverdichtete Luft 8 nach dem entsprechenden Verdichter 1 entsteht, wobei diese Massnahme nur dann eingreifen soll, wenn auf den Zwischendruck zwecks Vermeidung der Luftkondensation unbedingt eingegriffen werden muss.

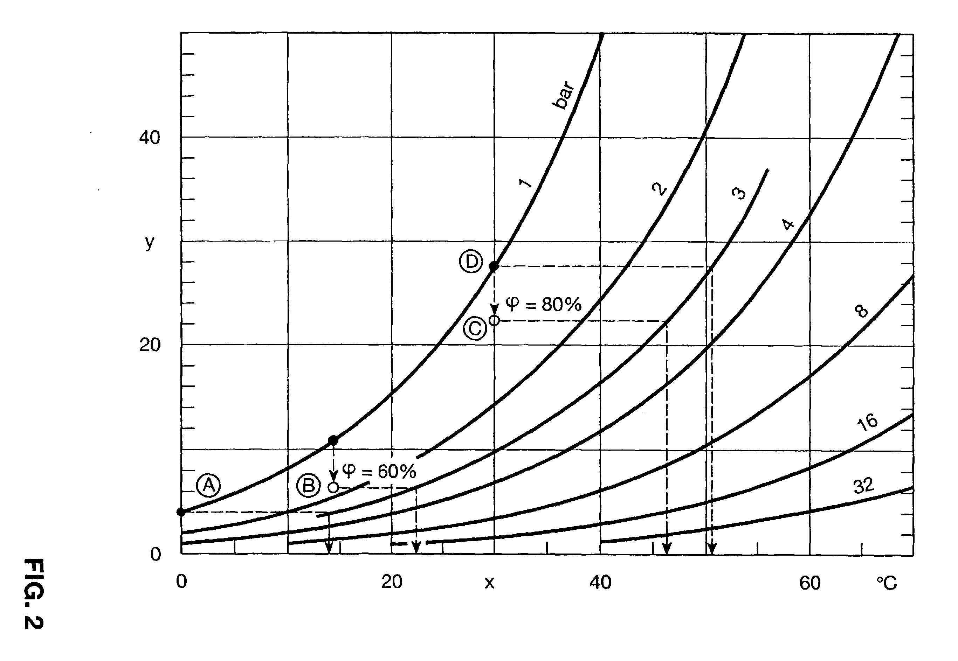

In Fig. 2 ist die Aufnahmefähigkeit von Wasserdampf in Luft (Taupunkt) dargestellt. In Funktion der Temperatur, Abszisse X, und der absoluten Feuchtigkeit der Luft in Gramm Wasserdampf pro Kilogramm Luft, Ordinate Y, sind Kurven konstanten Druckes für 100% relative Feuchtigkeit (Taulinien) eingetragen. Vier Beispiele sollen den Zusammenhang erläutern:

### Beispiel A:

Bei 0°C Umgebungstemperatur enthält 1 Kg Luft selbst bei maximaler Feuchte von 100% nur ca. 4 g Wasserdampf. Wird der Zwischenkühler auf 3 bar gelegt, so darf die Kühlwassertemperatur bis auf 14°C gesenkt werden, ehedem es zur Kondensation kommt.

### Beispiel B:

Unter ISO-Bedingungen, d.h. bei 15°C und 60% relativer Luftfeuchte, ϕ = 60%, enthält 1 kg Luft 6,4 g Wasserdampf. In diesem Fall darf bei 3 bar die Kühlwassertemperatur nicht unterhalb von 22°C liegen.

### Beispiel C und D:

Bei hoher Aussentemperatur von 30°C und 80% Luftfeuchtigkeit darf die Kühlwassertemperatur nicht unter 46°C, und bei 100% Luftfeuchtigkeit nicht unter 51°C abgesenkt werden. Bei beispielsweise 8 bar Zwischenkühldruck wären mehr als 70°C erforderlich. Das Diagramm gemäss Fig. 2 zeigt, dass eine Erhöhung des Zwischenkühlerdruckes auch eine Anhebung der Kühlwassertemperatur erforderlich macht, und umgekehrt.

Um also das thermodynamische Potential der Zwischenkühlung voll nutzbar zu machen, ist der Zwischendruck möglichst niedrig zu wählen.

An Stelle von Wasser kann auch ein anderes, beliebiges Kühlmittel, resp. Wärmetransportmittel dienen.

Die Verdichtereinheit kann auch mehrere Zwischenkühler aufweisen, wobei jeder eine individuelle Temperaturregelung verlangt.

Diese Methode der Verhinderung von Luftkondensation und Wiederverdampfung während der Verdichtung ist mit weniger Druckabfall und Aufwand verbunden, als dies mechanische Mittel, beispielsweise Fliehkraftabscheidung oder Gleich- resp. Gegenstromschaltung der Kühlelemente, verursachen.

### Bezugszeichenliste

- 1: Niederdruck-Verdichter
- 2: Hochdruck-Verdichter
- 3: Brennkammer
- 4: Turbine
- 5: Generator
- 6: Verstellbare Verdichterleitreihe
- 7: Angesaugte Luft
- 8: Zwischenverdichtete Luft
- 9: Zwischenkühler
- 10: Gekühlte, zwischenverdichtete Luft
- 11: Abgase
- 12: Pumpe
- 13: Vorgewärmtes Kühlwasser
- 13a: Aufgeheiztes Kühlwasser
- 14: Wärmesenke, Kühlturm
- 15: Rechner, Regler
- 16: Stelle zur Abnahme der Taupunkttemperatur
- 17: Bypass
- 18: Drosselorgan
- 19: Stelle vor dem Zwischenkühler
- T: Umgebungstemperatur
- ϕ: Luftfeuchte
- p: Umgebungsdruck
- Pic: Austrittsluftdruck des Zwischenkühlers
- Tw: vorgewärmte Kühlwassertemperatur
- x: Abszisse, Temperatur
- Y: Ordinate, Absolute spezifische. Luftfeuchtigkeit in g Wasserdampf pro kg Luft

## Patentansprüche

1. Verfahren zum Betrieb einer Kraftwerksanlage **auf Basis einer Gasturbine,** welche Kraftwerksanlage unter Anderem wenigstens zwei, strömungsmässig in Reihe geschaltete Teilverdichter (1,2) beinhaltet, sowie einen im Strömungsweg zwischen diesen angeordneten Zwischenkühler (9) zur Kühlung einer vorverdichteten Luft (8), welcher Zwischenkühler einen Kühlkreislauf beinhaltet, durch welchen Kühlkreislauf erwärmtes Kühlmittel (13a) einer Wärmesenke (14)zugeführt und anschliessend zum Zwischenkühler zurückgeführt wird, welches Verfahren die folgenden Schritte beinhaltet:
• Ermittlung wenigstens der Umgebungstemperatur (T), der Luftfeuchte (ϕ) der Umgebungsluft, und des Druckes (p_{ic}) **der vorverdichteten Luft** am Austritt aus dem Zwischenkühler
• Bestimmung der Taupunktstemperatur der Luft am Austritt aus dem Zwischenkühler aus den ermittelten Daten
• Führung eines Teilstromes erwärmten Kühlmediums unter Umgehung der Wärmesenke und Zumischung dieses Teilstroms zu dem gekühlten Kühlmittel stromab der Wärmesenke, und
• Regelung **des Massenstroms dieses Teilstroms und bei Bedarf** des **Massenstroms des gekühlten Kühlmittels stromab der Wärmesenke**
wobei **die Regelung so vergenommen wird** , dass die Temperatur des gesamten Kühlmittelmassenstroms (13) am Eintritt in den Zwischenkühler **dem** Taupunkt der Luft am Austritt aus dem Zwischenkühler **entspricht.**

2. Verfahren nach Anspruch 1, **dadurch gekennzeichnet, dass** zur weiteren Regelung der Taupunkttemperatur der gekühlten zwischenverdichteten Luft (10) bei variierendem Austrittsluftdruck (Pic) aus dem Zwischenkühler (9) eine verstellbare Verdichterleitreihe (6) eines ersten zur Verdichtereinheit gehörigen Teilverdichters (1) geregelt wird.

## Claims

1. Method of operating a power station plant based on a gas turbine, the said power station plant containing, inter alia, at least two component compressors (1, 2) fluidically connected in series and also an intercooler (9) which is arranged in the flow path between the said component compressors, is intended for cooling precompressed air (8) and contains a cooling circuit through which heated coolant (13a) is fed to a heat sink (14) and is then fed back to the intercooler, the said method comprising the following steps:
• determining at least the ambient temperature (T) of the air humidity (ϕ) of the ambient air and the pressure (p_{ic}) of the precompressed air at the outlet from the intercooler
• determining the dew-point temperature of the air at the outlet from the intercooler from the data determined
• directing a partial flow of heated cooling medium while bypassing the heat sink and admixing this partial flow with the cooled coolant downstream of the heat sink, and
• regulating the mass flow of this partial flow and when required the mass flow of the cooled coolant downstream of the heat sink,
the regulation being carried out in such a way that the temperature of the entire coolant mass flow (13) at the inlet to the intercooler corresponds to the dew point of the air at the outlet from the intercooler.

2. Method according to Claim 1, **characterized in that** an adjustable compressor guide row (6) of a first component compressor (1) belonging to the compressor unit is regulated for the further regulation of the dew-point temperature of the cooled air (10), compressed to an intermediate pressure, at a varying outlet-air pressure (Pic) from the intercooler (9).

## Revendications

1. Procédé pour l'exploitation d'une installation de centrale électrique à base d'une turbine à gaz, laquelle installation de centrale thermique contient, entre autres choses, au moins deux compresseurs partiels (1, 2), branchés en série pour ce qui est de l'écoulement, ainsi qu'un refroidisseur intermédiaire (9), disposé dans le trajet d'écoulement entre ces derniers, en vue du refroidissement d'un air pré-comprimé (8), lequel refroidisseur intermédiaire contient un circuit de refroidissement, à travers lequel l'agent réfrigérant échauffé (13a) est conduit vers un puits de chaleur (14) et est reconduit ensuite au refroidisseur intermédiaire, lequel procédé contient les étapes suivantes:
• Détermination au moins de la température environnante (T), de l'humidité de l'air (ϕ) de l'air environnant, et de la pression (pic) de l'air pré-comprimé à la sortie du refroidisseur intermédiaire
• Détermination de la température de point de rosée de l'air à la sortie du refroidisseur intermédiaire à partir des données établies
• Conduite d'un courant partiel de l'agent réfrigérant échauffé avec passage en dérivation du puits de chaleur et mélange de ce courant partiel à l'agent réfrigérant refroidi en aval du puits de chaleur, et
• Régulation du courant massique de ce courant partiel et, si besoin est, du courant massique de l'agent réfrigérant refroidi en aval du puits de chaleur,
la régulation étant effectuée de telle manière que la température du courant massique global d'agent réfrigérant (13) à l'entrée dans le refroidisseur intermédiaire correspond au point de rosée de l'air à la sortie du refroidisseur intermédiaire.

2. Procédé selon la revendication 1, **caractérisé en ce qu'**en vue de la régulation supplémentaire de la température de point de rosée de l'air refroidi comprimé à un stade intermédiaire (10) pour une pression d'air de sortie variable (pic) hors du refroidisseur intermédiaire (9), l'on règle une rangée réglable de guides de compresseur (6) d'un premier compresseur partiel (1) appartenant à l'unité de compresseur.
